# EUROPEAN PATENT SPECIFICATION

(11) **EP 2 146 496 B1**
(45) Date of publication and mention of the grant of the patent: **20.12.2017**
(21) Application number: 08104752.4
(22) Date of filing: 15.07.2008
(51) Int. Cl.: H04L 27/26, H04M 11/06

(54) **Method and device for data processing and communication system comprising such device**
Verfahren und Vorrichtung zur Datenverarbeitung und Kommunikationssystem mit einer derartigen Vorrichtung
Procédé et dispositif de traitement de données et système de communication comprenant un tel dispositif

(43) Date of publication of application: 20.01.2010
(73) Proprietor: ADTRAN GmbH, 10557 Berlin (DE)
(72) Inventor: Ahrndt, Thomas, 85521, Ottobrunn (DE); Bianchi, Roberto, 91056, Erlangen (DE); Schweyer, Bernhard, 82433, Bad Kohlgrub (DE)
(74) Representative: Brachmann, Roland W.

(56) References cited:
- EP-A- 1 385 309
- US-A1- 2006 153 310
- US-A1- 2006 159 192

## Description

The invention relates to a method and to a device for data processing and to a communication system comprising such a device.

US 2006/0159192 A1 relates to an approach directed for increasing cyclic prefix and cyclic suffix based upon a fast Fourier transform (FFT) and inverse fast Fourier transform (IFFT) .

EP 1 385 309 A relates to an approach directed to a method of transmit power adjustment in a multitone communication system.

US 2006/0153310 A1 relates to an approach directed to a implement time-domain equalizer (TEQ) training to shorten the channel impulse response of twisted copper lines for DMT-based VDSL systems.

DSL or xDSL, is a family of technologies that provide digital data transmission over the wires of a local telephone network.

Asymmetric Digital Subscriber Line (ADSL) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

VDSL (Very High Speed DSL) is an xDSL technology providing faster data transmission over a single twisted pair of wires. High bit rates are achieved at a range of about 300 meters (1000 ft), which allows for 26 Mbit/s with symmetric access or up to 52 Mbit/s in downstream - 12 Mbit/s in upstream with asymmetric access.

According to its high bandwidth, VDSL is capable of supporting applications like HDTV, as well as telephone services (e.g., Voice over IP) and general Internet access, over a single connection.

VDSL2 (Very High Speed Digital Subscriber Line 2) is an access technology that exploits the existing infrastructure of copper wires that were originally used for plain old telephone service (POTS). It can be deployed from central offices (COs), from fiber-fed cabinets preferably located near the customer premises, or within buildings.

ITU-T G.993.2 (VDSL2) is an enhancement to G.993.1 (VDSL) that permits the transmission of asymmetric and symmetric (full duplex) aggregate data rates up to 200 Mbit/s on twisted pairs using a bandwidth up to 30 MHz.

The xDSL wide band modulation approaches are susceptible regarding crosstalk interference that is introduced to the twisted pair transmission line and received by the modem.

Crosstalk occurs when wires are coupled, in particular between wire pairs of the same or a nearby bundle that are used for different signal transmission. Hence, data signals from one or more sources can be superimposed on and contaminate a data signal. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone line in the same and/or a nearby multi-core cable or bundle. With an increasing transmission speed, this situation even deteriorates, which may significantly limit a maximum data rate to be transmitted via a single line.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

xDSL in particular utilizes Discrete Multi-Tone (DMT) modulation. The signal to be transmitted is obtained by an Inverse Fourier Transform (IFT) of the frequency signal, which is constituted from a set of QAM symbols to be transmitted. Each so called DMT symbol may comprise of a plurality of QAM symbol which are organized as subcarriers of a width of 4,3125 kHz.

After IFT, a cyclic prefix, and eventually a suffix are added to the time signal. This suffix and prefix are used, amongst other things, to obtain synchronization on the physical layer.

Dynamic Spectrum Management (DSM) Layer 3 (L3) is a technology regarding mainly VDSL2 transmission technique. It is used to enhance the performance of VDSL2 data transmission by reducing mutual interference.

In case a new modem is connected to a DSM L3 controller, this new modem causes additional interference to existing connections. The DSM L3 controller cannot compensate such interference from the very beginning as it requires some time to adapt itself to the new situation. This typically results in a lower margin and thus in a higher amount of bit errors. It is even possible that a connection (or several connections) may be lost in case the bit errors cannot be corrected, e.g., by Reed-Solomon decoding.

Another disadvantage stems from the fact that the new modem runs a training phase over the whole frequency band that it later plans to use for data transmission. This may be necessary for the modem calculating the feasible data rate based on signal-to-noise ratio (SNR) measurements for each subcarrier. However, such training phase results in interference caused by the new modem, which interference affects the whole frequency band. Furthermore, such training needs a significant amount of time and thus may significantly deteriorate connections of existing modems.

The **problem** to be solved is to overcome the disadvantages as described above and in particular to reduce any interference and/or noise during start-up of a DSM system or based on an additional modem joining a DSM group.

This problem is solved according to the features of the independent claims. Further embodiments result from the depending claims.

In order to overcome this problem, a method for data processing is provided, wherein a transmission power of at least one network element is reduced during training and/or start-up of a further network element.

Such reduction of the transmission power allows reduced crosstalk and/or interference for said further network element.

In an embodiment, a cyclic prefix and/or a cyclic suffix of the at least one network element is/are increased during said training and/or startup of the further network element.

In another embodiment, the cyclic prefix and/or the cyclic suffix is/are used for synchronization purposes.

In a further embodiment, the at least one network element enters normal operation after the training and/or start-up of the further network element.

Hence, the transmission power may be temporarily reduced for training purposes of a further network element and/or for a startup-phase of the system. After such training or startup is over, the transmission power can be increased again to a level of normal operation. It is noted that such level of normal operation may be determined and/or controlled by a central network component, e.g., a DSM L3 controller and/or a DSLAM.

In a next embodiment, the training and/or startup of the further network element is initiated by a central network element.

Such central network element may preferably control the (temporary) adjustment of the transmission power.

It is also an embodiment that the central network element and the at least one network element as well as the further network element are connected via a DSL network.

These central network element and the further network element are in particular connected via a digital subscriber line (via xDSL like, e.g., VDSL, VDSL2 or the like).

Pursuant to another embodiment, the central network element is or is associated with a digital subscriber line access multiplexer (DSLAM) and/or a central office (CO).

According to an embodiment, the at least one network element and the further network element are or are associated with at least one customer premises equipment.

According to another embodiment, the at least one network element and the further network element and the modem are members of a group, in particular of a DSM L3 group.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a central office or digital subscriber line access multiplexer.

The problem stated supra is further solved by a communication system comprising the device as described herein.

Embodiments of the invention are shown and illustrated in the following figure:

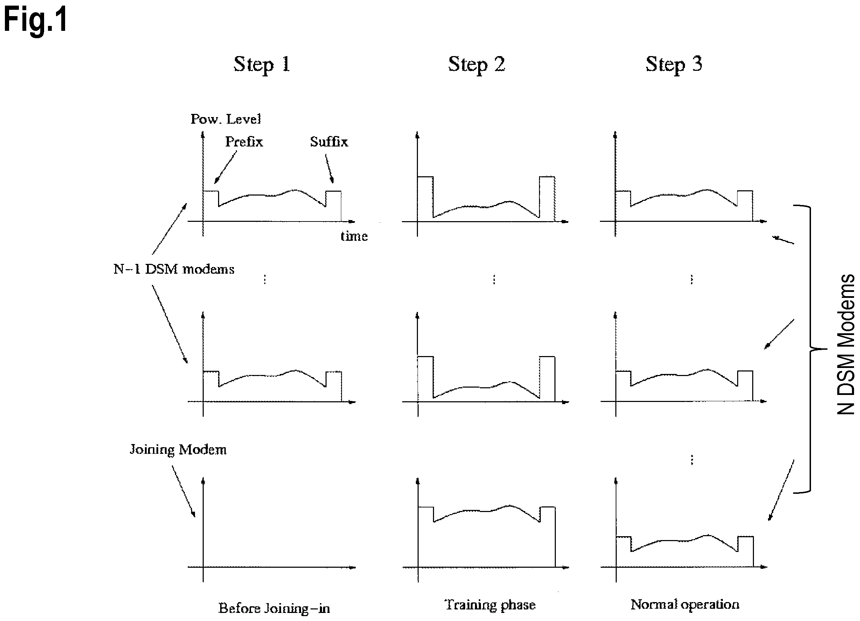

- Fig.1: shows an example of a modem joining a DSM L3 group in case the synchronization of the physical layer is obtained by determination of cyclic prefix and suffix.

The approach provided is based on a communication among several modems, in particular of modems that are members of a DSM L3 group.

Preferably, the modems of the DSM L3 group try, at the same time, to preserve their connection (e.g., physical layer and IP layer synchronization), while allowing another modem (e.g., a joining modem) to efficiently process its training phase.

Hence, for the joining modem during its training phase, a power back-off can be performed by the modems already connected. Such power back-off may preferably be software-driven and/or software-initiated.

The power back-off is obtained at the expense of a (e.g., partial) delay for data to be processed by the already connected DSM L3 modems. In order to allow for an minimum delay in particular of prioritized information, a class of data packets may be considered to identify those data with high Quality-of-Service (QoS) prior to those data with minor QoS. Hence, in a situation of (temporary) delay, data of high QoS may be processed prior to other data.

The delay allows the DSM L3 controller to modify the data-symbols in the OFDM frame thus preserving the Internet protocol (IP) structure (thus avoiding problems at an IP level), while reducing the average power of the OFDM symbol. The power reduction is obtained through an inverse mapping of the IP-packet overhead part on the QAM symbols. The QAM symbols associated with the IP overhead may remain unchanged, whereas other QAM symbols are on the contrary set to other low-power values.

Such reduction of the average power in the OFDM symbols allows the joining modem to process its training under a low-interference condition. Because of DSM L3 such condition is similar to a condition the modem is going to be active in after training has been completed. Hence, advantageously, this approach allows to reach nearly the same performance as with Seamless Rate Adaptation (SRA) without the complications of such SRA.

In addition, a synchronization of the DSM L3 modems over the physical layer is preserved and further stabilized by the approach provided herein. This physical layer synchronization can be achieved either by determining a correlation of cyclic prefix and suffix in the time signal or by pilot tones. Therefore, the frequency domain signal could be modified so that, while the IP part remains unchanged, the remaining portions of the signal are used to be boosted for synchronization purposes of the modems. This may apply to synchronization algorithms used either for the part of the signal that is copied to the cyclic prefix and/or to the suffix or directly to the pilot tones, or both.

Hence, an improvement of a signal-to-noise ratio (SNR) can be achieved regarding the synchronization-related part of the OFDM frame thereby further allowing a more stable physical layer synchronization for the DSM L3 modems at the cost of a slight power increase (prefix and suffix and/or pilot tones constitute a small part of the total OFDM frame). Such increase of power is further based on a fraction of the yet low-power signal. Therefore, the power increase due to synchronization protection is equalized by the power decrease obtained with the frequency domain packet shaping. Moreover, the power increase in prefix and suffix is spread over the whole frequency band. Hence, an error in the SNR estimation per-bin (subcarrier) is spread over all bins, thus having a minor impact on each bin.

**Fig.1** shows an example of a modem joining a DSM L3 group in case the synchronization of the physical layer is obtained by determination of cyclic prefix and suffix.

In a step 1, the configuration with N-1 DSM modems is shown. In a step 2, the joining modem starts its training phase and, as a response, the transmit power of the N-1 modems is decreased. On the other hand, the power of cyclic prefix and suffix is increased, in order to protect the physical layer synchronization. In a step 3, the training phase of the joining modem and of the DSM algorithm are both concluded. The joining modem is now also included in the DSM group, and has started its showtime routine, lowering its transmit power. On the other hand, the other N-1 modems have turned back to normal operation.

The approach suggested may be implemented on a pure software level, directly in the software of the DSM L3 controller. No hardware updates or firmware updates of the DSLAM or of the CPEs may become necessary.

Advantageously, the approach suggested allows an improved performance of a joining modem and avoids breakdowns of DSM L3 modems that are already operative. The approach is further compliant with existing DSL standards and can be used to avoid any SRA.

## Claims

1. A method for data processing, wherein, during training and/or start-up of a further network element, a transmission power of at least one network element is reduced,
**characterized in that**
the power of a cyclic prefix and/or a cyclic suffix in a signal and/or a pilot tone is/are increased.

2. The method according to claim 2, wherein the cyclic prefix and/or the cyclic suffix and/or the pilot tones is/are used for synchronization purposes.

3. The method according to any of the preceding claims, wherein the at least one network element enters normal operation after the training and/or start-up of the further network element.

4. The method according to any of the preceding claims, wherein the training and/or startup of the further network element is initiated by a central network element.

5. The method according to claim 4, wherein the central network element and the at least one network element as well as the further network element are connected via a DSL network.

6. The method according to any of claims 4 or 5, wherein the central network element is or is associated with a digital subscriber line access multiplexer and/or a central office.

7. The method according to any of the preceding claims, wherein the at least one network element and the further network element are or are associated with at least one customer premises equipment.

8. The method according to any of the preceding claims, wherein the at least one network element and the further network element and the modem are members of a group, in particular of a DSM L3 group.

9. A device comprising a and/or being associated with a processor unit and/or a hard-wired circuit and/or a logic device that is arranged such that the method according to any of the preceding claims is executable thereon.

10. The device according to claim 9, wherein said device is a communication device, in particular a or being associated with a central office or digital subscriber line access multiplexer.

11. Communication system comprising the device according to any of claims 9 or 10.

## Patentansprüche

1. Verfahren zur Datenverarbeitung, wobei während eines Trainings und/oder eines Hochfahrens eines weiteren Netzwerkelements eine Übertragungsleistung mindestens eines Netzwerkelements reduziert wird,
**dadurch gekennzeichnet, dass**
die Leistung eines zyklischen Präfixes und/oder eines zyklischen Suffixes in einem Signal und/oder ein Pilotton erhöht wird bzw. werden.

2. Verfahren nach Anspruch 2, wobei das zyklische Präfix und/oder das zyklische Suffix und/oder die Pilottöne zu Synchronisationszwecken verwendet wird bzw. werden.

3. Verfahren nach einem der vorhergehenden Ansprüche, wobei das mindestens eine Netzwerkelement nach dem Training und/oder dem Hochfahren des weiteren Netzwerkelements in den Normalbetrieb eintritt.

4. Verfahren nach einem der vorhergehenden Ansprüche, wobei das Training und/oder das Hochfahren des weiteren Netzwerkelements durch ein zentrales Netzwerkelement eingeleitet wird bzw. werden.

5. Verfahren nach Anspruch 4, wobei das zentrale Netzwerkelement und das mindestens eine Netzwerkelement sowie das weitere Netzwerkelement über ein DSL-Netzwerk verbunden sind.

6. Verfahren nach einem der Ansprüche 4 oder 5, wobei das zentrale Netzwerkelement ein Digital Subscriber Line Access Multiplexer und/oder ein Central Office ist oder damit in Verbindung steht.

7. Verfahren nach einem der vorhergehenden Ansprüche, wobei das mindestens eine Netzwerkelement und das weitere Netzwerkelement mindestens ein Teilnehmerendgerät sind oder damit in Verbindung stehen.

8. Verfahren nach einem der vorhergehenden Ansprüche, wobei das mindestens eine Netzwerkelement und das weitere Netzwerkelement und das Modem zu einer Gruppe insbesondere einer DSM-L3-Gruppe gehören.

9. Vorrichtung, die eine Prozessoreinheit und/oder eine festverdrahtete Schaltung und/oder eine Logikschaltung aufweist und/oder damit in Verbindung steht, derart ausgebildet, dass das Verfahren nach einem der vorhergehenden Ansprüche darauf ausführbar ist.

10. Vorrichtung nach Anspruch 9, wobei die Vorrichtung eine Kommunikationsvorrichtung ist und insbesondere ein Central Office oder ein Digital Subscriber Line Access Multiplexer ist oder damit in Verbindung steht.

11. Kommunikationssystem, das die Vorrichtung nach einem der Ansprüche 9 oder 10 aufweist.

## Revendications

1. Procédé de traitement de données, dans lequel, pendant un apprentissage et/ou un démarrage d'un élément de réseau supplémentaire, une puissance de transmission d'au moins un élément de réseau est réduite,
**caractérisé en ce que**
la puissance d'un préfixe cyclique et/ou d'un suffixe cyclique dans un signal et/ou une fréquence pilote est/sont augmentée(s).

2. Procédé selon la revendication 2, dans lequel le préfixe cyclique et/ou le suffixe cyclique et/ou les fréquences pilotes est/sont utilisé (es) à des fins de synchronisation.

3. Procédé selon l'une quelconque des revendications précédentes, dans lequel l'au moins un élément de réseau entre en fonctionnement normal après l'apprentissage et/ou le démarrage de l'élément de réseau supplémentaire.

4. Procédé selon l'une quelconque des revendications précédentes, dans lequel l'apprentissage et/ou le démarrage de l'élément de réseau supplémentaire est lancé par un élément de réseau central.

5. Procédé selon la revendication 4, dans lequel l'élément de réseau central et l'au moins un élément de réseau ainsi que l'élément de réseau supplémentaire sont connectés via un réseau DSL.

6. Procédé selon l'une quelconque des revendications 4 ou 5, dans lequel l'élément de réseau central est ou est associé à un multiplexeur d'accès de ligne d'abonné numérique et/ou un central téléphonique.

7. Procédé selon l'une quelconque des revendications précédentes, dans lequel l'au moins un élément de réseau et l'élément de réseau supplémentaire sont ou sont associés à au moins un équipement d'abonné.

8. Procédé selon l'une quelconque des revendications précédentes, dans lequel l'au moins un élément de réseau et l'élément de réseau supplémentaire et le modem sont des membres d'un groupe, en particulier d'un groupe DSM L3.

9. Dispositif comprenant un et/ou étant associé à une unité de processeur et/ou un circuit câblé et/ou un dispositif logique qui est agencé de sorte que le procédé selon l'une quelconque des revendications précédentes soit exécutable sur celui-ci.

10. Dispositif selon la revendication 9, dans lequel ledit dispositif est un dispositif de communication, en particulier un ou associé à un central téléphonique ou un multiplexeur d'accès de ligne d'abonné numérique.

11. Système de communication comprenant le dispositif selon l'une quelconque des revendications 9 ou 10.
